(19) Europäisches Patentamt / European Patent Office / Office européen des brevets

(11) **EP 2 694 375 B1**

(12) **FASCICULE DE BREVET EUROPEEN**

(45) Date de publication et mention
de la délivrance du brevet:
**28.11.2018 Bulletin 2018/48**

(21) Numéro de dépôt: **12718237.6**

(22) Date de dépôt: **04.05.2012**

(51) Int Cl.:
**B64G 1/28** *(2006.01)* **B64G 1/36** *(2006.01)*
**G01D 5/14** *(2006.01)*

(86) Numéro de dépôt international:
**PCT/EP2012/058184**

(87) Numéro de publication internationale:
**WO 2012/152669 (15.11.2012 Gazette 2012/46)**

(54) **DISPOSITIF ET PROCEDE DE DETERMINATION D'ATTITUDE D'UN SATELLITE, ET SATELLITE EMBARQUANT UN TEL DISPOSITIF**

VORRICHTUNG UND VERFAHREN ZUR LAGEBESTIMMUNG EINES SATELLITEN, UND SATELLIT MIT EINER SOLCHEN VORRICHTUNG

DEVICE AND METHOD FOR ATTITUDE DETERMINATION OF A SATELLITE, AND SATELLITE COMPRISING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**12.02.2014 Bulletin 2014/07**

(73) Titulaire: **Airbus Defence and Space SAS**
**31402 Toulouse Cedex 4 (FR)**

(72) Inventeurs:
• **LAGADEC, Kristen**
**F-12120 Centres (FR)**

• **ARDAN, Anaïs**
**F-31280 Mons (FR)**

(74) Mandataire: **Ipside**
**6, Impasse Michel Labrousse**
**31100 Toulouse (FR)**

(56) Documents cités:
**EP-A2- 1 134 640      US-A- 3 998 409**
**US-A1- 2002 121 573      US-B1- 6 263 264**

**Description**

DOMAINE TECHNIQUE

La présente invention appartient au domaine des satellites artificiels dont l'attitude est contrôlée par des moyens comprenant un ou plusieurs actionneurs inertiels. Plus particulièrement, la présente invention concerne un procédé et un dispositif de détermination de l'attitude et/ou de la variation d'attitude d'un tel satellite, ainsi qu'un satellite embarquant un tel dispositif.

ÉTAT DE LA TECHNIQUE

Pour déterminer l'attitude d'un satellite il est connu d'embarquer un senseur stellaire dans le satellite. Un tel senseur stellaire est un capteur optique qui observe une zone de l'espace, et qui détermine l'attitude dudit satellite en fonction des positions d'étoiles dans son champ de vision. Toutefois, les mesures effectuées par un senseur stellaire sont parfois trop bruitées pour permettre de déterminer l'attitude du satellite avec une précision suffisante, en se basant uniquement sur les mesures du senseur stellaire.

Il est également connu de déterminer les variations d'attitude d'un satellite artificiel en embarquant dans le satellite des gyromètres. Les gyromètres sont des capteurs cinétiques qui mesurent la vitesse de rotation du satellite, vitesse de rotation qui permet de déterminer les variations d'attitude du satellite. En pratique, il n'est pas rare d'avoir quatre gyromètres ou plus dans un satellite, pour la détermination des variations d'attitude dudit satellite.

Les dispositifs de détermination de l'attitude actuels sont généralement munis à la fois de gyromètres et d'un senseur stellaire. De tels dispositifs permettent de déterminer l'attitude du satellite avec une bonne précision, car les mesures fournies par les gyromètres permettent de filtrer les bruits de mesure des senseurs stellaires. Toutefois, de tels dispositifs sont coûteux, en particulier du fait de la présence de nombreux gyromètres.

Le document US 6 263 264 décrit un dispositif de détermination de l'attitude d'un satellite utilisant des mesures de la vitesse de rotation des roues de réaction.

EXPOSÉ DE L'INVENTION

La présente invention a pour objectif de remédier aux inconvénients des dispositifs proposés par l'art antérieur, notamment à ceux exposés ci-avant, en proposant une solution qui permette, pour certaines missions, d'avoir des dispositifs de détermination de l'attitude et/ou de la variation d'attitude qui soient dépourvus de gyromètres, tout en réduisant l'impact des bruits de mesure des senseurs stellaires sur la performance de la détermination de l'attitude et/ou de la variation d'attitude.

Selon un premier aspect, l'invention concerne un dispositif de détermination d'une attitude ou d'une variation d'attitude d'un satellite, ledit satellite étant muni d'un système de contrôle d'attitude comportant au moins un actionneur inertiel, ledit au moins un actionneur inertiel comportant un élément rotatif monté mobile en rotation autour d'un axe de rotation, élément rotatif dont la rotation est commandée pour créer un couple de contrôle d'attitude dudit satellite. Le dispositif comporte en outre :

- un capteur angulaire destiné à équiper l'au moins un actionneur inertiel, apte à mesurer l'angle de rotation de l'élément rotatif autour de son axe de rotation,
- des moyens de calcul configurés pour déterminer l'attitude ou la variation d'attitude du satellite, induite par la rotation de l'élément rotatif de l'au moins un actionneur inertiel, en fonction de mesures de l'angle de rotation de l'élément rotatif par le capteur angulaire.

Du fait du principe de conservation du moment cinétique, les variations de la vitesse de rotation du satellite et de la vitesse de rotation de l'élément rotatif de l'actionneur inertiel sont liées.

En pratique, les mesures de vitesse de rotation ou de l'accélération angulaire de l'élément rotatif de l'actionneur inertiel sont généralement très bruitées, en particulier lorsque celles-ci sont faibles. L'attitude estimée en fonction de mesures de vitesse de rotation ou de mesures d'accélération angulaire de l'élément rotatif est alors peu précise, et ce d'autant plus que ces mesures bruitées doivent être intégrées pour restituer l'attitude.

En considérant des capteurs angulaires aptes à mesurer directement l'angle de rotation de l'élément rotatif de l'actionneur inertiel, les performances sur la restitution de l'attitude du satellite seront améliorées par rapport à l'utilisation de mesures de la vitesse de rotation ou de l'accélération angulaire d'un tel élément rotatif. En effet, les mesures de l'angle de rotation sont plus précises que les mesures de la vitesse de rotation ou de l'accélération angulaire d'un tel élément rotatif.

Suivant des modes particuliers de réalisation, le dispositif comporte l'une ou plusieurs des caractéristiques suivantes, prises isolément ou suivant toutes les combinaisons techniquement possibles :

- le dispositif comporte un capteur d'attitude apte à mesurer l'attitude du satellite, et les moyens de calcul sont configurés pour déterminer l'attitude du satellite en fonction de mesures de l'angle de rotation de l'élément rotatif par le capteur angulaire et en fonction de mesures de l'attitude du satellite par le capteur d'attitude ;
- le capteur d'attitude est un senseur stellaire ;
- les moyens de calcul comprennent au moins un filtre numérique d'estimation, de préférence un filtre de Kalman ;
- le capteur angulaire est apte à mesurer l'angle de rotation de l'élément rotatif avec une résolution égale ou inférieure à 1/128ème de tour, de préférence égale ou inférieure à 1/512ème de tour ;
- le capteur angulaire est un capteur à effet Hall ou un codeur optique.

Selon un second aspect, l'invention concerne un satellite comportant un système de contrôle d'attitude et un dispositif de détermination d'attitude ou de variation d'attitude selon un mode quelconque de réalisation de l'invention, et dans lequel l'au moins un actionneur inertiel est une roue de réaction.

De préférence, le satellite est dépourvu de gyromètre (ou gyroscope) mesurant directement l'attitude ou variation d'attitude du satellite.

Selon un troisième aspect, l'invention concerne un procédé de détermination d'une attitude ou d'une variation d'attitude d'un satellite, ledit satellite étant muni d'un système de contrôle d'attitude comportant au moins un actionneur inertiel, ledit au moins un actionneur inertiel comportant un élément rotatif monté mobile en rotation autour d'un axe de rotation, élément rotatif dont la rotation est commandée pour créer un couple de contrôle d'attitude dudit satellite. En outre, l'au moins un actionneur inertiel étant préalablement muni d'un capteur angulaire apte à mesurer l'angle de rotation de l'élément rotatif autour de son axe de rotation, le procédé comporte les étapes de :

- mesure de l'angle de rotation de l'élément rotatif autour de son axe de rotation au moyen dudit capteur angulaire,
- détermination de l'attitude ou de la variation d'attitude du satellite, induite par la rotation de l'élément rotatif de l'au moins un actionneur inertiel, en fonction de mesures de l'angle de rotation de l'élément rotatif par le capteur angulaire.

Suivant des modes particuliers de mise en oeuvre, le procédé comporte l'une ou plusieurs des caractéristiques suivantes, prises isolément ou suivant toutes les combinaisons techniquement possibles :

- le satellite étant préalablement muni d'un capteur d'attitude apte à mesurer l'attitude du satellite, le procédé comporte une étape de mesure de l'attitude du satellite, et l'attitude du satellite est déterminée en fonction de mesures de l'angle de rotation de l'élément rotatif par le capteur angulaire et en fonction de mesures de l'attitude du satellite par le capteur d'attitude ;
- l'attitude du satellite est déterminée également en fonction de consignes de couple appliquées à l'au moins un actionneur inertiel ;
- l'étape de détermination de l'attitude du satellite met en oeuvre un filtre numérique d'estimation, les mesures de l'angle de rotation de l'élément rotatif et les mesures de l'attitude du satellite étant fournies en entrée dudit filtre numérique d'estimation ; de préférence, le filtre numérique d'estimation est un filtre de Kalman ;
- l'étape de détermination de l'attitude du satellite comprend les sous-étapes de :

  o estimation du couple créé par l'au moins un actionneur inertiel en fonction de mesures de l'angle de rotation de l'élément rotatif,
  o estimation de l'attitude du satellite en fonction de l'estimée du couple créé par l'au moins un actionneur inertiel et en fonction de mesures de l'attitude du satellite par le capteur d'attitude ;

- la sous-étape d'estimation de l'attitude du satellite met en oeuvre un premier filtre de Kalman, et les mesures de l'attitude du satellite et l'estimée du couple crée par l'au moins un actionneur inertiel sont fournies en entrée dudit premier filtre de Kalman ;
- la sous-étape d'estimation du couple créé par l'au moins un actionneur inertiel met en oeuvre un second filtre de Kalman, et les mesures de l'angle de rotation de l'élément rotatif sont fournies en entrée dudit second filtre de Kalman.

Selon un quatrième aspect, l'invention concerne un produit programme d'ordinateur, comportant un ensemble d'instructions de code de programme qui, lorsqu'elles sont exécutées par un processeur, mettent en oeuvre un procédé de détermination d'attitude ou de variation d'attitude selon un mode quelconque de mise en oeuvre de l'invention.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un satellite muni d'un dispositif de détermination de l'attitude selon l'invention,
- Figures 2a et 2b : des représentations schématiques d'exemples d'implémentation de l'invention mettant en oeuvre un ou plusieurs filtres numériques dynamiques,
- Figures 3a et 3b : des diagrammes représentant schématiquement les principales étapes d'un procédé de détermination de l'attitude d'un satellite selon deux modes de mise en oeuvre,
- Figure 4 : des courbes illustrant les performances attendues en termes de précision de détermination de l'attitude.

## DESCRIPTION DÉTAILLÉE DE MODES DE RÉALISATION

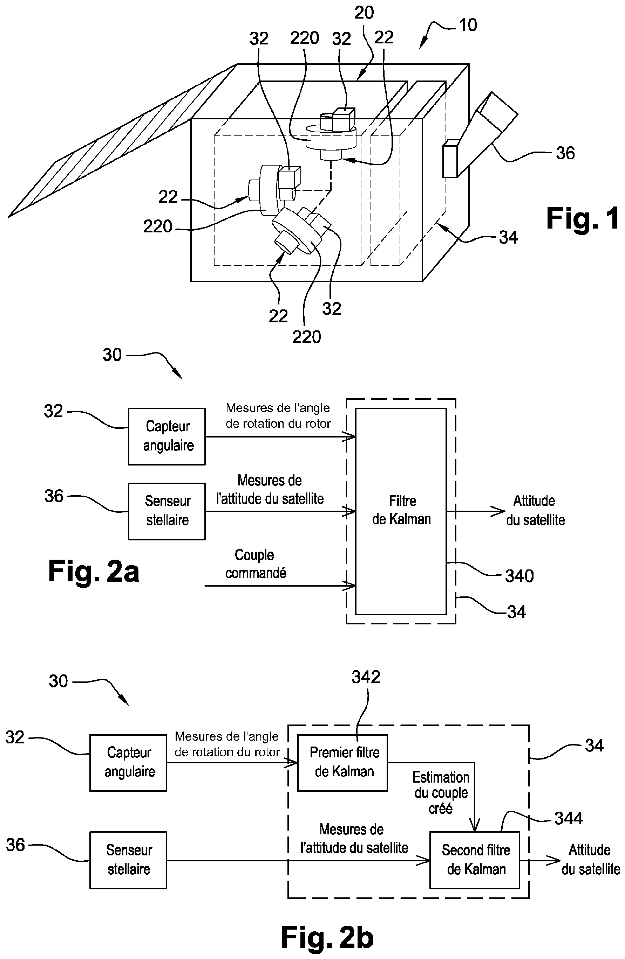

La figure 1 représente de façon très schématique un satellite 10 selon l'invention, comportant notamment un système 20 de contrôle d'attitude.

Le système 20 de contrôle d'attitude comprend des actionneurs permettant de modifier l'attitude du satellite 10, dont au moins un actionneur inertiel 22. Dans le mode de réalisation illustré par la figure 1, le système 20 de contrôle d'attitude comprend trois actionneurs inertiels 22. Rien n'exclut, suivant d'autres modes de réalisation non illustrés par des figures, d'avoir un nombre différent d'actionneurs inertiels.

Les actionneurs inertiels 22 sont du type comportant un élément rotatif ou rotor 220 monté mobile en rotation autour d'un axe de rotation, dont la rotation permet de créer un couple de contrôle d'attitude dudit satellite 10. Le contrôle des actionneurs inertiels 22 se fait en mettant en oeuvre des moyens conventionnels qui sortent du cadre de l'invention.

Dans la suite de la description, on se place dans le cas où les actionneurs inertiels 22 sont des roues de réaction. L'invention est néanmoins applicable à d'autres types d'actionneurs inertiels comportant un élément rotatif, comme par exemple des volants d'inertie.

Le système 20 de contrôle d'attitude comprend également un dispositif 30 de détermination de l'attitude du satellite 10.

Le dispositif 30 de détermination de l'attitude comprend en outre des capteurs angulaires 32, chaque roue de réaction 22 étant équipée d'un de ces capteurs angulaires 32.

Chaque capteur angulaire 32 est apte à mesurer l'angle de rotation du rotor 220 de la roue de réaction 22 associée à ce capteur angulaire, autour de l'axe de rotation dudit rotor.

Par exemple, les capteurs angulaires 32 sont des capteurs à effet de hall et/ou des codeurs optiques, considérés comme connus de l'homme du métier. Bien qu'ils soient généralement mis en oeuvre pour mesurer la vitesse de rotation du rotor, de tels capteurs angulaires 32 peuvent être considérés comme des codeurs incrémentaux, et ainsi mesurer l'angle cumulé de rotation des rotors 220 par comptage du nombre de pas de mesure parcourus depuis un instant antérieur.

Le dispositif 30 de détermination de l'attitude comprend également des moyens 34 de calcul configurés pour restituer l'attitude du satellite 10, induite par la rotation des rotors 220 des roues de réaction, en fonction des mesures des angles de rotation des rotors 220 réalisées par les capteurs angulaires 32.

Les moyens 34 de calcul se présentent par exemple sous la forme d'une unité de calcul reliée aux capteurs angulaires 32. L'unité de calcul comporte au moins un processeur et des moyens de mémorisation dans lesquels est mémorisé un produit programme d'ordinateur, sous la forme d'un ensemble d'instructions de code de programme à exécuter pour effectuer les calculs nécessaires pour déterminer l'attitude du satellite 10. Dans une variante, l'unité de calcul comporte également un ou des circuits logiques programmables, de type FPGA, PLD, etc., adaptés à effectuer tout ou partie des calculs nécessaires pour déterminer l'attitude du satellite 10.

On explique à présent comment les mesures réalisées par les capteurs angulaires 32 peuvent être utilisées pour déterminer l'attitude du satellite 10.

Du fait du principe de conservation du moment cinétique, les variations de la vitesse de rotation du satellite 10 et de la vitesse de rotation du rotor 220 de cette roue de réaction 22 sont liées. Si l'on considère une formulation à un axe de la dynamique de l'ensemble comprenant le satellite 10 et une roue de réaction 22, on a la relation suivante :

$$\dot{H} = I \cdot \dot{\Omega} + J \cdot \dot{\omega} = C_e \qquad (e1)$$

expression dans laquelle :

- « • » correspond à l'opérateur de dérivation,
- H est le moment cinétique total de l'ensemble comprenant le satellite 10 et la roue de réaction 22,
- I est l'inertie du satellite 10,
- $\Omega$ est la vitesse de rotation du satellite 10,
- J est l'inertie du rotor 220 de la roue de réaction 22,
- $\omega$ est la vitesse de rotation du rotor 220 de la roue de réaction 22,
- $C_e$ correspond au couple externe dû à des perturbations externes.

En l'absence de perturbations externes, c'est-à-dire lorsque le couple externe $C_e$ est sensiblement nul, la variation de la vitesse de rotation du satellite 10 est proportionnelle à la variation de la vitesse de rotation du rotor :

$$\dot{\Omega} = -\left(\frac{J}{I}\right) \cdot \dot{\omega} \qquad (e2)$$

On comprend donc que si l'on dispose d'une mesure précise de la vitesse de rotation du rotor 220, et si l'on connait le rapport J/I, alors on peut déterminer la vitesse angulaire du satellite 10 sans avoir recours à un ou plusieurs gyromètres.

En considérant un capteur angulaire 32 apte à mesurer l'angle de rotation $\Delta\alpha$ du rotor 220 entre deux instants séparés par une durée $\Delta T$, on peut déterminer la variation $\Delta\theta$ de l'attitude du satellite 10, si l'on connaît par ailleurs le moment cinétique total H, qui est l'intégrale des couples externes $C_e$. On a alors l'expression suivante :

$$\Delta\theta = H \cdot \Delta T - \left(\frac{J}{I}\right) \cdot \Delta\alpha \qquad (e3)$$

Ainsi, l'observation de l'angle de rotation $\Delta\alpha$ du rotor 220 entre deux instants permet d'observer la variation $\Delta\theta$ de l'attitude du satellite 10 entre ces deux instants. Si l'on connait l'attitude du satellite 10 à un instant donné, on peut par conséquent déterminer l'attitude dudit satellite à un instant ultérieur en intégrant les angles de rotation $\Delta\alpha$ du rotor 220, afin d'obtenir un angle cumulé de rotation $\alpha$. Il est à noter que les capteurs angulaires du type codeurs incrémentaux mesurent directement l'angle cumulé de rotation $\alpha$, c'est-à-dire qu'ils mesurent directement l'intégrale des angles de rotation $\Delta\alpha$ par rapport à un instant antérieur.

On comprend donc que, en équipant les roues de réaction 22 des capteurs angulaires 32 et par un traitement approprié des mesures des angles de rotation (relatif $\Delta\alpha$ ou cumulé $\alpha$) des rotors 220 de ces roues de réaction, il est possible de déterminer la variation d'attitude du satellite 10, et également l'attitude du satellite 10 suite à cette variation, si l'attitude dudit satellite avant cette variation est connue.

Il est à noter que, selon la présente invention, on mesure les angles de rotation (relatifs $\Delta\alpha$ ou cumulés $\alpha$) desdits rotors, qui ne doivent pas être confondus avec les vitesses de rotation et/ou les accélérations angulaires desdits rotors. En effet, les mesures de vitesse de rotation ou de l'accélération angulaire sont généralement bruitées, lesquelles mesures doivent être intégrées pour restituer l'attitude du satellite 10. C'est pourquoi, on considère avantageusement des capteurs angulaires 32 aptes à mesurer directement l'angle de rotation (relatif $\Delta\alpha$ ou cumulé $\alpha$), dans la mesure où de tels capteurs angulaires 32 permettront le plus souvent d'obtenir de meilleures performances sur la restitution de l'attitude du satellite 10 que des capteurs ne permettant de mesurer que la vitesse de rotation ou l'accélération angulaire.

En pratique, dans les systèmes de contrôle d'attitude de l'art antérieur, il est connu de munir les roues de réaction de capteurs angulaires, du type tachymètres, tels que des capteurs à effet Hall ou des codeurs optiques, dont les mesures sont utilisées pour estimer les vitesses de rotation des rotors à des fins de contrôle local et/ou de surveillance par l'électronique de la roue de réaction. Selon l'invention, les mesures d'angles de rotation fournies par ces capteurs angulaires pourront alors être avantageusement utilisées pour restituer l'attitude du satellite 10, de sorte que la mise en oeuvre de l'invention ne nécessitera pas d'ajouter des capteurs angulaires dédiés à la restitution d'attitude, mais pourra utiliser les tachymètres préexistants pour obtenir des mesures des angles de rotation desdits rotors.

Dans tous les cas, les capteurs angulaires, tels que des capteurs à effet Hall ou des codeurs optiques, sont des composants moins coûteux que les gyromètres. Dans le cas où le dispositif 30 de détermination d'attitude serait dépourvu de gyromètre, l'ajout de capteurs angulaires 32 dans le seul but de restituer l'attitude conformément à l'invention aboutirait à un dispositif 30 dont la complexité et le coût seraient inférieurs à ceux des dispositifs comportant des gyromètres.

Il est à noter que si seules des mesures des angles de rotation des rotors 220 des roues de réaction 22 sont utilisées par le dispositif 30, ledit dispositif 30 ne sera en pratique apte à déterminer que la variation d'attitude du satellite 10.

Il est également à noter que la détermination de la variation d'attitude en fonction des seules mesures des angles de rotation des rotors 220 des roues de réaction 22 n'est efficace que sous réserve que les roues de réaction 22 soient la principale source de variation de l'attitude du satellite 10.

Ce sera par exemple le cas lorsque l'attitude du satellite 10 est contrôlée exclusivement par les roues de réaction 22, et lorsque les couples externes $C_e$ seront négligeables ou connus de façon précise (par exemple du fait qu'ils varient lentement) sur l'horizon de temps caractéristique au cours duquel on cherche à restituer les évolutions de l'attitude. Ce ne sera en général pas le cas si les couples externes $C_e$ ne sont pas négligeables et entraînent de fortes variations d'attitude et/ou si ces couples externes $C_e$ varient rapidement de sorte qu'ils ne peuvent pas être estimés de façon suffisamment précise.

Dans tous les cas, en particulier lorsque la restitution de l'attitude du satellite 10 n'est pas possible en fonction des seules mesures des angles de rotation des rotors des roues de réaction 22, d'autres mesures peuvent être utilisées.

En particulier, dans le mode préféré de réalisation illustré par la figure 1, le dispositif 30 comporte en outre un capteur d'attitude, apte à mesurer l'attitude du satellite 10. Dans un tel cas, le dispositif 30 peut être mis en oeuvre non seulement pour déterminer la variation d'attitude du satellite 10 entre deux instants, mais également l'attitude du satellite 10 dans un référentiel prédéfini quelconque. Dans la suite de la description, on se place, sauf mention contraire, dans le cas où le dispositif 30 est mis en oeuvre pour déterminer l'attitude du satellite 10.

De préférence, le capteur d'attitude est un capteur optique. Dans la suite de la description, on se place de manière non limitative où le capteur d'attitude est un capteur optique du type senseur stellaire 36.

En outre, les moyens 34 de calcul sont configurés pour déterminer l'attitude du satellite 10 en fonction non seulement des mesures des angles de rotation des rotors 220 des capteurs angulaires 32, mais également en fonction des mesures de l'attitude du satellite 10 par le senseur stellaire 36. En d'autres termes, les moyens 34 de calcul mettent en oeuvre un filtre d'estimation de l'attitude du satellite 10, qui effectue une fusion des mesures effectuées par les capteurs angulaires 32 et les mesures effectuées par le senseur stellaire 36.

Du fait des mesures de l'attitude du satellite 10 par le senseur stellaire 36, la détermination de l'attitude du satellite 10 sera plus robuste qu'en exploitant uniquement les mesures des angles de rotation des rotors 220 des roues de réaction 22.

Par rapport à un dispositif de détermination d'attitude qui n'utiliserait que des mesures d'attitude fournies par un senseur stellaire, l'utilisation des mesures des angles de rotation des rotors 220 des roues de réaction 22 permet d'améliorer les performances de restitution de l'attitude du satellite 10. En effet, les mesures d'attitude fournies par le senseur stellaire 36 étant bruitées, l'ajout des mesures faites par les capteurs angulaires 32 permet de filtrer une partie du bruit des mesures dudit senseur stellaire.

De préférence, les moyens 34 de calcul comprennent au moins un filtre numérique dynamique du type filtre de Kalman.

On décrit ci-après des exemples non limitatifs de filtres de Kalman adaptés à permettre la détermination d'attitude du satellite 10 en fonction des mesures des capteurs angulaires 32 et des mesures du senseur stellaire 36. A des fins de simplification des équations, on se place dans un système à une dimension, en formulant les filtres suivant un seul axe de contrôle de l'attitude et pour une seule roue de réaction 22. La généralisation de ces équations au cas avec N roues de réaction 22 pour un contrôle du satellite 10 suivant 3 axes peut s'effectuer de manière conventionnelle.

La figure 2a représente un premier exemple dans lequel les moyens 34 de calcul comprennent un seul filtre 340 de Kalman.

On se place de manière non limitative dans le cas d'un filtre de Kalman linéaire classique. De manière connue de l'homme de l'art, un tel filtre est un filtre d'estimation récursif qui comporte deux étapes principales, une étape de prédiction (ou propagation) et une étape de mise à jour (ou recalage), au cours desquelles on détermine itérativement les paramètres suivants :

- $x_{k,k}$ : estimation du vecteur d'état $x_k$ du filtre 340 à l'instant k,
- $P_{k,k}$ : matrice de covariance de l'erreur sur l'état du filtre 340.

De manière connue, la prédiction de l'état du filtre et la prédiction de la matrice de covariance de l'erreur peuvent s'effectuer d'après les expressions suivantes :

$$x_{k+1,k} = F_k \cdot x_{k,k} + B_k \cdot u_k \qquad (e4)$$

$$P_{k+1,k} = F_k \cdot P_{k,k} \cdot F_k^T + Q_k \qquad (e5)$$

expressions dans lesquelles :

- $F_k$ est une matrice de transition, qui relie l'état à l'instant k à l'état à l'instant k+1,
- $u_k$ est une entrée de commande,
- $B_k$ est une matrice qui relie l'entrée de commande $u_k$ au vecteur d'état du filtre,

- $Q_k$ est une matrice de covariance du bruit.
- $A^T$ est la matrice transposée d'une matrice A.

De manière connue, la mise à jour de l'estimation du vecteur d'état du filtre 340 et la mise à jour de la matrice de covariance de l'erreur s'effectuent par exemple d'après les relations suivantes :

$$x_{k+1,k+1} = x_{k+1,k} \cdot (Id - K_k) + K_k \cdot y_k \qquad (e6)$$

$$P_{k+1,k+1} = (Id + K_k \cdot H_k) \cdot P_{k+1,k} \cdot (Id + K_k \cdot H_k)^T + K_k \cdot R_k \cdot K_k^T \qquad (e7)$$

expressions dans lesquelles :

- $y_k$ correspond aux mesures fournies en entrée du filtre 340,
- $H_k$ est une matrice qui relie le vecteur d'état $x_k$ aux mesures $y_k$,
- $R_k$ est une matrice de covariance du bruit de mesure,
- Id est une matrice identité,
- $K_k$ est une matrice de gain.

De manière connue, la matrice $K_k$ de gain est par exemple calculée d'après la relation :

$$K_k = P_{k+1,k} \cdot H_k^T \cdot \left(R_k + H_k \cdot P_{k+1,k} \cdot H_k^T\right)^{-1} \qquad (e8)$$

Dans le contexte de l'invention, et tel qu'illustré par la figure 2a, le filtre 340 de Kalman prend de préférence en entrée :

- les mesures de l'angle de rotation du rotor 220 de la roue de réaction 22 par le capteur angulaire 32,
- les mesures d'attitude du satellite 10 par le senseur stellaire 36,
- un couple commandé (ou consigne de couple) à la roue de réaction 22 par le système 20 de contrôle d'attitude.

Les états du filtre 340 comprennent par exemple les états suivants :

- $\alpha$ : angle cumulé de rotation du rotor 220 de la roue de réaction 22,
- $\omega$ : vitesse de rotation du rotor 220,
- f : accélération angulaire du rotor due au frottement,
- $\theta$ : attitude du satellite 10,
- $\Omega$ : vitesse de rotation du satellite 10,
- c : accélération angulaire du satellite 10 due aux couples externes,
- d : dérivée des couples perturbateurs externes.

Le vecteur d'état $x_k$ du filtre à l'instant k comprend alors les états discrets suivants :

$$x_k = \begin{bmatrix} \alpha_k & \omega_k & f_k & \theta_k & \Omega_k & c_k & d_k \end{bmatrix}^T \qquad (e9)$$

Afin de prédire l'état du filtre et la matrice de covariance de l'erreur, on considère les équations dynamiques continues suivantes :

$$\dot{\alpha} = \omega \qquad\qquad (e10)$$

$$\dot{\omega} = -\frac{1}{J} \cdot (C_c + C_f) \qquad\qquad (e11)$$

$$\dot{\theta} = \Omega \qquad\qquad (e12)$$

$$\dot{\Omega} = \frac{1}{I} \cdot (C_c + C_e + C_f) \qquad\qquad (e13)$$

équations dans lesquelles :

- $C_c$ est le couple commandé à la roue de réaction 22,
- $C_f$ est le couple de frottement du rotor 220 de la roue de réaction.

Les expressions (e10) et (e11) correspondent aux équations dynamiques continues pour la prédiction des états associés à la roue de réaction 22, tandis que les expressions (e12) et (e13) correspondent aux équations dynamiques continues pour la prédiction des états associés au satellite 10.

Les équations dynamiques dans le domaine discret (échantillonné) se déduisent des équations dynamiques continues, et peuvent s'exprimer sous les formes approchées suivantes :

$$\alpha_{k+1} = \alpha_k + \Delta T \cdot \omega_k - \frac{\Delta T^2}{2} \cdot \left( f_k + \frac{I}{J} \cdot u_k \right) \qquad\qquad (e14)$$

$$\omega_{k+1} = \omega_k - \Delta T \cdot \left( f_k + \frac{I}{J} \cdot u_k \right) \qquad\qquad (e15)$$

$$f_{k+1} = f_k \cdot \left( 1 - \frac{\Delta T}{\tau_f} \right) \qquad\qquad (e16)$$

$$\theta_{k+1} = \theta_k + \Delta T \cdot \Omega_k - \frac{\Delta T^2}{2} \cdot \left( c_k + u_k + \frac{J}{I} \cdot f_k \right) \qquad\qquad (e17)$$

$$\Omega_{k+1} = \Omega_k + \Delta T \cdot \left( c_k + u_k + \frac{J}{I} \cdot f_k \right) \qquad\qquad (e18)$$

$$c_{k+1} = c_k + \Delta T \cdot d_k \qquad\qquad (e19)$$

expressions dans lesquelles :

- $\Delta T$ est la période d'échantillonnage,

- $u_k$, l'entrée de commande, correspond au couple commandé normalisé par l'inertie du satellite 10, soit $C_c/I$,
- le frottement du rotor 220 est modélisé par une variable aléatoire exponentiellement corrélée, c'est-à-dire un bruit blanc de moyenne nulle et d'écart-type $\sigma_f$, filtré par un filtre passe-bas de constante de temps $\tau_f$ ; la covariance associée à cette variable aléatoire exponentiellement corrélée, à reporter dans la matrice $Q_k$, s'exprime alors $2 \cdot \Delta T \cdot \sigma^2_f/\tau_f$.

Dans l'exemple non limitatif décrit, la dérivée $d_k$ des couples externes $C_e$ n'est pas estimée car leur modèle d'évolution n'est pas considéré connu. Pour ce faire, les gains qui multiplient la dérivée $d_k$ dans la matrice $K_k$ de gain sont arbitrairement mis à zéro.

Le capteur angulaire 32 et le senseur stellaire 36 fournissent des mesures respectivement de l'angle cumulé de rotation $\alpha$ du rotor 220 de la roue de réaction 22 et de l'attitude $\theta$ du satellite 10. La matrice $H_k$ s'exprime comme suit :

$$H_k = \begin{bmatrix} 1 & 0 & 0 & 0 & 0 & 0 & 0 \\ 0 & 0 & 0 & 1 & 0 & 0 & 0 \end{bmatrix} \qquad (e20)$$

Afin de simplifier le réglage du filtre 340 de Kalman, on peut modéliser le bruit de mesure stellaire par un bruit blanc gaussien de moyenne nulle et d'écart-type $\sigma_s$ dont la valeur est choisie de manière conventionnelle en fonction d'une connaissance a priori de caractéristiques du bruit de mesure.

Le bruit de mesure de l'angle cumulé de rotation $\alpha$ correspond principalement à l'erreur de quantification sur la position angulaire du rotor 220, et est sensiblement le même que le bruit de mesure de l'angle de rotation $\Delta\alpha$. Si la vitesse de rotation du rotor 220 est suffisamment variable, l'erreur de quantification peut être modélisée comme un bruit blanc gaussien de moyenne nulle et d'écart-type $\sigma_\alpha$ s'exprimant en fonction d'un pas de quantification q comme :

$$\sigma_\alpha \approx \frac{q}{\sqrt{12}} \qquad (e21)$$

La matrice $R_k$ de covariance du bruit de mesure s'exprime dans ce cas comme suit :

$$R_k = \begin{bmatrix} \sigma^2_s & 0 \\ 0 & \dfrac{q^2}{12} \end{bmatrix} \qquad (e22)$$

Compte tenu des expressions (e14) à (e19), la matrice $F_k$ de transition peut s'exprimer comme suit :

$$F_k = \begin{bmatrix} 1 & \Delta T & -\Delta T^2/2 & 0 & 0 & 0 & 0 \\ 0 & 1 & -\Delta T & 0 & 0 & 0 & 0 \\ 0 & 0 & 1-\Delta T/\tau_f & 0 & 0 & 0 & 0 \\ 0 & 0 & (J/I) \cdot \Delta T^2/2 & 1 & \Delta T & \Delta T^2/2 & 0 \\ 0 & 0 & (J/I) \cdot \Delta T & 0 & 1 & \Delta T & 0 \\ 0 & 0 & 0 & 0 & 0 & 1 & \Delta T \\ 0 & 0 & 0 & 0 & 0 & 0 & 1 \end{bmatrix} \qquad (e23)$$

La matrice $B_k$ de commande peut s'exprimer comme suit :

$$B_k = \frac{1}{J} \cdot \begin{bmatrix} -\Delta T^2/2 & -\Delta T & 0 & (J/I) \cdot \Delta T^2/2 & (J/I) \cdot \Delta T & 0 & 0 \end{bmatrix} \qquad (e24)$$

Il est à noter que, de manière générale, la prise en compte du frottement du rotor 220 dans le filtre 340 permet d'avoir un estimateur plus robuste en cas d'instabilité de frottement. En outre, le fait de mesurer l'angle de rotation du rotor 220, et de fournir en entrée le couple commandé $u_k$ permet également d'avoir une robustesse améliorée en cas de frottements, et permet de déduire le couple effectivement créé par la roue de réaction 22, qui diffère du couple commandé notamment du fait desdits frottements.

La figure 2b représente schématiquement un second exemple dans lequel les moyens 34 de calcul comprennent deux filtres de Kalman : un premier filtre 342 de Kalman et un second filtre 344 de Kalman.

Le premier filtre 342 de Kalman est mis en oeuvre pour estimer le couple créé par la roue de réaction 22. Si on considère le filtre 340 de Kalman décrit ci-avant en référence à la figure 2a, le premier filtre 342 peut par exemple ne conserver que les états [$\alpha$, $\omega$, f], de sorte que la matrice de transition du premier filtre 342 est obtenue à partir de l'expression (e23) en ne conservant que les coefficients relatifs aux états [$\alpha$, $\omega$, f] :

$$F_k = \begin{bmatrix} 1 & \Delta T & -\Delta T^2/2 \\ 0 & 1 & -\Delta T \\ 0 & 0 & 1-\Delta T/\tau_f \end{bmatrix} \qquad (e25)$$

En sortie du premier filtre 342, le couple créé, désigné par $u'_k$, est par exemple calculé comme suit :

$$u'_k = -\frac{1}{I} \cdot \frac{(\omega_{k+1} - \omega_k)}{\Delta T} \qquad (e26)$$

Le second filtre 344 de Kalman est mis en oeuvre pour déterminer l'attitude du satellite en fonction des mesures d'attitude par le senseur stellaire 36 et en fonction de l'estimée du couple créé $u'_k$. Si on considère le filtre 340 de Kalman décrit ci-avant, le second filtre 344 peut par exemple ne conserver que les états [$\theta$, $\Omega$, c, d], de sorte que la matrice de transition du second filtre 344 est obtenue à partir de l'expression (e23) en ne conservant que les coefficients relatifs aux états [$\theta$, $\Omega$, c, d] :

$$F_k = \begin{bmatrix} 1 & \Delta T & \Delta T^2/2 & 0 \\ 0 & 1 & \Delta T & \Delta T^2/2 \\ 0 & 0 & 1 & \Delta T \\ 0 & 0 & 0 & 1 \end{bmatrix} \qquad (e27)$$

La matrice $B_k$ de commande peut s'exprimer comme suit :

$$B_k = \begin{bmatrix} \Delta T^2/2 & \Delta T & 0 & 0 \end{bmatrix} \qquad (e28)$$

La séparation en un premier filtre 342 et un second filtre 344 est avantageuse car elle présente une meilleure compatibilité arrière avec d'éventuels filtres existants. En effet, le premier filtre 342 peut être mis en oeuvre pour améliorer les performances de tout filtre existant d'estimation d'attitude qui prendrait en entrée le couple commandé, sans qu'il soit nécessaire de modifier ce filtre existant.

Tel qu'indiqué précédemment, la généralisation des exemples précédents à un nombre N de roues de réaction 22 pour un contrôle de l'attitude du satellite 10 suivant 3 axes s'effectue de manière conventionnelle. Par exemple, dans le cas décrit en référence à la figure 2b, on peut prévoir un premier filtre 342 de Kalman pour chacune des roues de réaction 22, de sorte à estimer les états [$\alpha$, $\omega$, f] pour chacune des roues de réaction. L'estimée du couple créé $u'_k$ est par exemple obtenue comme suit :

$$u'_k = -\frac{1}{I \cdot \Delta T} \cdot W \cdot \begin{bmatrix} \omega^1_{k+1} - \omega^1_k \\ \omega^2_{k+1} - \omega^2_k \\ \vdots \\ \omega^N_{k+1} - \omega^N_k \end{bmatrix} \qquad (e29)$$

expression dans laquelle :

- W est une matrice de projection des axes des roues de réaction sur les trois axes d'un référentiel associé au satellite 10,
- $\omega^n_k$ est la vitesse de rotation du rotor 220 de la n-ième roue de réaction 22 à l'instant k.

De manière générale, les expressions données ci-avant en référence aux figures 2a et 2b illustrent des modes préférés de mise en oeuvre basés sur un (figure 2a) ou deux (figure 2b) filtres de Kalman permettant de déterminer l'attitude du satellite 10 en fonction des mesures des angles de rotation des rotors 220 par les capteurs angulaires 32 et en fonction des mesures d'attitude par le senseur stellaire 36.

On comprend que ces expressions ne sont pas limitatives de l'invention et qu'un choix particulier d'implémentation du ou des filtres de Kalman, exploitant les mesures des angles de rotation des rotors 220 par les capteurs angulaires 32 et les mesures d'attitude par le senseur stellaire 36, ne constitue qu'un mode particulier de mise en oeuvre de l'invention.

De manière encore plus générale, il est également possible de considérer des filtres autres que des filtres de Kalman. Les filtres peuvent être tout type de filtre dynamique d'estimation, et/ou tout type de filtre statique à gains constants. Notamment, dans l'exemple décrit en référence à la figure 2b, rien n'exclut de remplacer l'un et/ou les deux filtres par des filtres qui ne sont pas des filtres de Kalman, y compris par des filtres à gains constants.

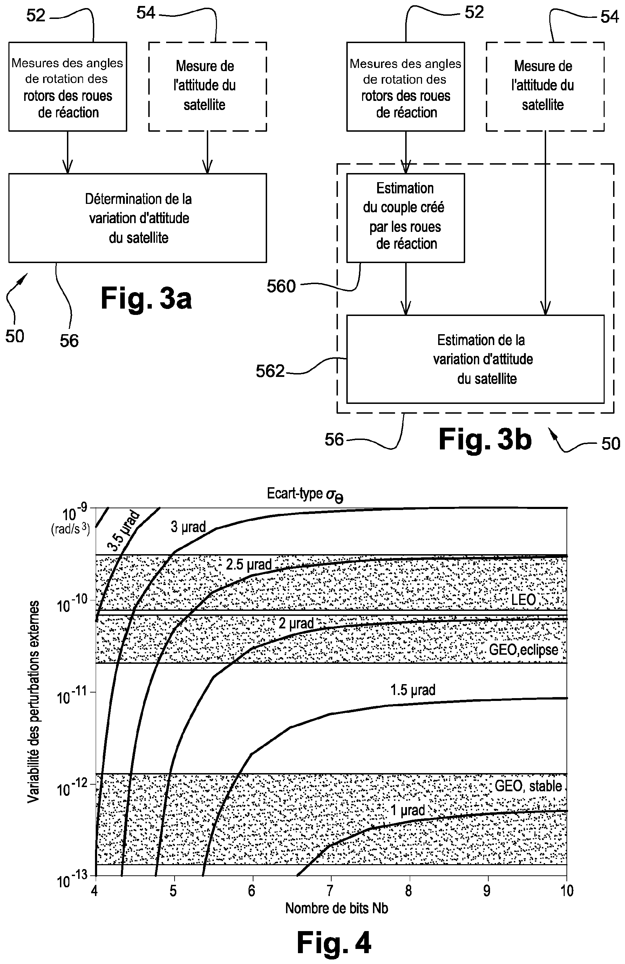

La figure 3a représente schématiquement les principales étapes d'un procédé 50 de détermination d'attitude ou de variation d'attitude, mis en oeuvre par le dispositif 30 selon l'invention.

Tel que représenté par la figure 3a, le procédé 50 comporte les étapes suivantes :

- 52 mesure des angles de rotation des rotors 220 des roues de réaction 22 au moyen des capteurs angulaires 32,
- 56 détermination de l'attitude du satellite, induite par la rotation des rotors 220 des roues de réaction 22, en fonction des mesures des angles de rotation desdits rotors.

Lorsque le satellite 10 comporte un senseur stellaire 36, le procédé comporte de préférence une étape 54 supplémentaire, visible sur la figure 3a, de mesure de l'attitude du satellite 10 par ledit senseur stellaire. L'attitude du satellite est alors déterminée au cours de l'étape 56 en fonction des mesures des angles de rotation des rotors et des mesures de l'attitude du satellite.

Dans une variante, l'attitude du satellite 10 est déterminée également en fonction de consignes de couple appliquées aux roues de réaction 22. C'est le cas notamment dans l'exemple décrit en référence à la figure 2a, où le couple commandé $u_k$ est fourni en entrée du filtre 340 de Kalman. Ceci est avantageux dans la mesure où la connaissance du couple commandé $u_k$ et des angles de rotation des rotors 220 (et leurs vitesses de rotation) permet de mieux estimer le couple de frottement $C_f$, et ainsi de mieux estimer les couples effectivement créés par les roues de réaction 22. De la sorte, les performances de la détermination de l'attitude du satellite 10 sont améliorées.

De préférence, et comme indiqué précédemment, l'étape 56 de détermination de l'attitude du satellite 10 met en oeuvre un filtre 340 de Kalman, les mesures des angles de rotation des rotors 220 et les mesures de l'attitude du satellite 10 étant fournies en entrée dudit filtre 340 de Kalman.

La figure 3b représente schématiquement un mode préféré de mise en oeuvre du procédé 50. Par rapport à la figure 3a, l'étape 56 de détermination d'attitude du satellite 10 comporte les sous-étapes de :

- 560 estimation des couples créés par les roues de réaction 22 en fonction de mesures des angles de rotation des rotors 220,
- 562 estimation de l'attitude du satellite 10 en fonction des estimées des couples créés par les roues de réaction 22 et en fonction de mesures de l'attitude du satellite 10 par le senseur stellaire 36.

Dans le cas du dispositif 30 décrit en référence à la figure 2b, la sous-étape 560 est exécutée par le premier filtre 342 et la sous-étape 562 est exécutée par le second filtre 344.

On discute à présent les performances de la détermination de l'attitude du satellite 10.

D'un point de vue théorique, on a vu que le bruit de mesure de l'angle cumulé de rotation correspond principalement à l'erreur de quantification sur la position angulaire du rotor 220, qui peut être modélisée comme un bruit blanc gaussien de moyenne nulle et d'écart-type $\sigma_\alpha$ s'exprimant en fonction d'un pas de quantification q comme :

$$\sigma_\alpha \approx \frac{q}{\sqrt{12}} \qquad (e30)$$

Cette erreur de quantification induit une erreur sur la détermination de l'attitude du satellite 10 qui peut également être modélisée comme un bruit blanc gaussien de moyenne nulle et d'écart-type $\sigma_\theta$ s'exprimant comme :

$$\sigma_\theta \approx \frac{J}{I} \cdot \frac{q}{\sqrt{12}} \qquad (e31)$$

Pour un pas de quantification q d'1/24ème de tour et un rapport d'inertie I/J de 25000, l'erreur de quantification représente ainsi une erreur sur la détermination de l'attitude du satellite 10 d'écart-type $\sigma_\theta$ sensiblement égal à 3 microradians ($\mu$rad), ce qui inférieur aux écarts-types des bruits de mesure constatés sur des mesure fournies par des senseurs stellaires (généralement de l'ordre de 20 $\mu$rad). En considérant un pas de quantification q d'1/200ème de tour, l'écart-type $\sigma_\theta$ est réduit à approximativement 0.36 $\mu$rad, rendant l'erreur de quantification négligeable.

Pour des satellites agiles, le ratio d'inertie I/J devient cependant moins favorable. Par exemple si le ratio d'inertie I/J est ramené à une valeur comprise entre 6000 et 8500, la précision de détermination de l'attitude au moyen des capteurs angulaires 32 est réduite d'un facteur 3 à 4.

La figure 4 illustre les performances de détermination de l'attitude. Plus particulièrement, la figure 4 représente des courbes pour différentes valeurs de l'écart-type $\sigma_\theta$, en fonction à la fois de la résolution de la mesure de l'angle de rotation (exprimée en nombre Nb de bits, le pas de quantification q étant égal à $1/2^{Nb}$-ème de tour) et de l'incertitude sur la variabilité des perturbations externes (exprimée en rad/s$^3$). Les courbes représentées sur la figure 4 ont été obtenues par simulation au moyen du filtre de Kalman décrit ci-avant en référence aux expressions (e4) à (e24).

Sur la figure 4, on a également mis en évidence des plages d'incertitude sur la variabilité des perturbations externes, correspondant aux environnements suivants :

- orbite basse LEO (« Low Earth Orbit ») : de environ $8 \cdot 10^{-11}$ à environ $3 \cdot 10^{-10}$ rad/s$^3$,
- orbite géostationnaire GEO (« GEostationary Orbit ») lors d'une éclipse : de environ $2 \cdot 10^{-11}$ à environ $7 \cdot 10^{-11}$ rad/s$^3$,
- orbite GEO stable : de environ $10^{-13}$ à environ $10^{-12}$ rad/s$^3$.

On voit sur la figure 4 qu'un pas de quantification égal à 1/128ème de tour (Nb égal à 7) permet d'obtenir un écart-type $\sigma_\theta$ compris entre environ 1.5 $\mu$rad et 2.5 $\mu$rad en orbite LEO et en orbite GEO lors d'une éclipse. Un pas de quantification égal à 1/512ème de tour (Nb égal à 9) permet d'obtenir un écart-type $\sigma_\theta$ proche de 1 $\mu$rad en orbite GEO stable.

De tels pas de quantification (égal ou inférieur à 1/128ème de tour, voire égal ou inférieur à 1/512ème de tour) sont inférieurs, voire très inférieurs aux pas de quantification considérés dans les satellites actuels équipés de roues de réaction dotées de capteurs angulaires (tachymètres) pour en estimer la vitesse de rotation. En outre, on comprend que le pas de quantification q selon l'invention sera déterminé en fonction des besoins de la mission en termes de précision de la restitution d'attitude. En particulier, le pas de quantification q selon l'invention pourra être déterminé en fonction du type d'orbite considéré : orbite LEO, orbite GEO, points de Lagrange, etc.

La description ci-avant illustre clairement que par ses différentes caractéristiques et leurs avantages, la présente invention atteint les objectifs qu'elle s'était fixés.

En particulier, on comprend que, du fait de l'utilisation de mesures des angles de rotation des rotors des roues de réaction pour déterminer l'attitude et/ou la variation d'attitude du satellite 10, on pourra dans certains cas avoir un satellite 10 dépourvu de gyromètres.

L'invention est cependant également applicable à des satellites équipés de gyromètres, les mesures des capteurs angulaires 32 pouvant être utilisées en complément des mesures des gyromètres, et/ou en relais desdites mesures des gyromètres lorsque ceux-ci sont défaillants.

L'invention est applicable à tout satellite dont l'attitude doit être déterminée. En outre, l'attitude déterminée pour le satellite 10 peut être utilisée pour contrôler l'attitude du satellite 10, et/ou pour effectuer un traitement a posteriori de données acquises par ce satellite 10, etc. Par exemple, dans le cas d'un satellite 10 d'observation de la Terre ou de tout autre corps céleste, l'attitude et/ou la variation d'attitude déterminées peuvent être transmises à une station sol avec les images acquises par le satellite 10, afin de compenser dans lesdites images des déformations géométriques introduites par les variations d'attitude du satellite lors de l'acquisition de ces images.

**Revendications**

1. Dispositif (30) de détermination d'une attitude ou d'une variation d'attitude d'un satellite (10), ledit satellite étant muni d'un système (20) de contrôle d'attitude comportant au moins un actionneur inertiel (22), ledit au moins un actionneur inertiel comportant un élément rotatif (220) monté mobile en rotation autour d'un axe de rotation, élément rotatif dont la rotation est commandée pour créer un couple de contrôle d'attitude dudit satellite, **caractérisé en ce que** ledit dispositif (30) comporte :

   - un capteur angulaire (32) apte à mesurer l'angle de rotation de l'élément rotatif autour de son axe de rotation,
   - des moyens (34) de calcul configurés pour déterminer l'attitude ou la variation d'attitude du satellite (10), induite par la rotation de l'élément rotatif (220) de l'au moins un actionneur inertiel (22), en fonction de mesures de l'angle de rotation de l'élément rotatif (220) par le capteur angulaire (32).

2. Dispositif (30) selon la revendication 1, **caractérisé en ce qu'**il comporte un capteur d'attitude (36) apte à mesurer l'attitude du satellite (10), et **en ce que** les moyens (34) de calcul sont configurés pour déterminer l'attitude du satellite (10) en fonction de mesures de l'angle de rotation de l'élément rotatif (220) par le capteur angulaire (32) et en fonction de mesures de l'attitude du satellite (10) par le capteur d'attitude (36).

3. Dispositif (30) selon la revendication 2, **caractérisé en ce que** le capteur d'attitude (36) est un senseur stellaire.

4. Dispositif (30) selon l'une des revendications précédentes, **caractérisé en ce que** les moyens (34) de calcul comprennent au moins un filtre (340, 342, 346) numérique d'estimation.

5. Dispositif (30) selon la revendication 4, **caractérisé en ce que** l'au moins un filtre (340, 342, 346) numérique d'estimation est un filtre de Kalman.

6. Dispositif (30) selon l'une des revendications précédentes, **caractérisé en ce que** le capteur angulaire (32) est apte à mesurer l'angle de rotation de l'élément rotatif (220) avec une résolution égale ou inférieure à 1/128ème de tour, de préférence égale ou inférieure à 1/512ème de tour.

7. Dispositif (30) selon l'une des revendications précédentes, **caractérisé en ce que** le capteur angulaire (32) est un capteur à effet Hall ou un codeur optique.

8. Satellite (10) comportant un système (20) de contrôle d'attitude, **caractérisé en ce qu'**il comporte un dispositif (30) selon l'une des revendications précédentes, et dans lequel l'au moins un actionneur inertiel (22) est une roue de réaction.

9. Satellite (10) selon la revendication 8, **caractérisé en ce qu'**il est dépourvu de gyromètre.

10. Procédé (50) de détermination d'une attitude ou d'une variation d'attitude d'un satellite (10), ledit satellite étant muni d'un système (20) de contrôle d'attitude comportant au moins un actionneur inertiel (22), ledit au moins un actionneur inertiel comportant un élément rotatif (220) monté mobile en rotation autour d'un axe de rotation, élément rotatif dont la rotation est commandée pour créer un couple de contrôle d'attitude dudit satellite, **caractérisé en ce que**, l'au moins un actionneur inertiel (22) étant préalablement muni d'un capteur angulaire (32) apte à mesurer l'angle de rotation de l'élément rotatif (220) autour de son axe de rotation, le procédé comporte les étapes de :

   - (52) mesure de l'angle de rotation de l'élément rotatif (220) autour de son axe de rotation au moyen dudit capteur angulaire (32),
   - (56) détermination de l'attitude ou de la variation d'attitude du satellite, induite par la rotation de l'élément rotatif (220) de l'au moins un actionneur inertiel (22), en fonction de mesures de l'angle de rotation de l'élément rotatif (220) par le capteur angulaire (32).

11. Procédé (50) selon la revendication 10, **caractérisé en ce que** :

   - le satellite (10) étant préalablement muni d'un capteur d'attitude (36) apte à mesurer l'attitude du satellite, le procédé comporte une étape (54) de mesure de l'attitude du satellite,
- l'attitude du satellite est déterminée en fonction de mesures de l'angle de rotation de l'élément rotatif (220) par le capteur angulaire (32) et en fonction de mesures de l'attitude du satellite (10) par le capteur d'attitude (36).

**12.** Procédé (50) selon la revendication 11, **caractérisé en ce que** l'attitude du satellite (10) est déterminée également en fonction de consignes de couple appliquées à l'au moins un actionneur inertiel.

**13.** Procédé (50) selon l'une des revendications 11 à 12, **caractérisé en ce que** l'étape (56) de détermination de l'attitude du satellite (10) met en oeuvre un filtre numérique d'estimation, les mesures de l'angle de rotation de l'élément rotatif (220) et les mesures de l'attitude du satellite (10) étant fournies en entrée dudit filtre numérique d'estimation.

**14.** Procédé (50) selon la revendication 13, **caractérisé en ce que** le filtre numérique d'estimation est un filtre de Kalman.

**15.** Procédé (50) selon la revendication 11, caractérisé en ce l'étape (56) de détermination de l'attitude du satellite (10) comprend les sous-étapes de :

- (560) estimation du couple créé par l'au moins un actionneur inertiel (22) en fonction de mesures de l'angle de rotation de l'élément rotatif (220),
- (562) estimation de l'attitude du satellite (10) en fonction de l'estimée du couple créé par l'au moins un actionneur inertiel (22) et en fonction de mesures de l'attitude du satellite (10) par le capteur d'attitude (36).

**16.** Procédé (50) selon la revendication 15, **caractérisé en ce que** la sous-étape (562) d'estimation de l'attitude du satellite (10) met en oeuvre un premier filtre de Kalman, et **en ce que** les mesures de l'attitude du satellite et l'estimée du couple crée par l'au moins un actionneur inertiel (22) sont fournies en entrée dudit premier filtre de Kalman.

**17.** Procédé (50) selon l'une des revendications 15 à 16, **caractérisé en ce que** la sous-étape (560) d'estimation du couple créé par l'au moins un actionneur inertiel (22) met en oeuvre un second filtre de Kalman, et **en ce que** les mesures de l'angle de rotation de l'élément rotatif (220) sont fournies en entrée dudit second filtre de Kalman.

**18.** Produit programme d'ordinateur, **caractérisé en ce qu'**il comporte un ensemble d'instructions de code de programme qui, lorsqu'elles sont exécutées par un processeur, mettent en oeuvre un procédé selon l'une des revendications 10 à 17.

**Patentansprüche**

**1.** Vorrichtung (30) zum Bestimmen einer Lage oder einer Lageänderung eines Satelliten (10), wobei der Satellit mit einem System (20) zur Lageregelung versehen ist, welches mindestens ein Trägheitsstellglied (22) aufweist, wobei das mindestens eine Trägheitsstellglied ein Drehelement (220) aufweist, das um eine Drehachse drehbar montiert ist, ein Drehelement, dessen Drehung angesteuert wird, um ein Lageregelungsmoment des Satelliten zu erstellen, **dadurch gekennzeichnet, dass** die Vorrichtung (30) aufweist:

- einen Winkeldetektor (32), der imstande ist, den Drehwinkel des Drehelements um dessen Drehachse zu messen,
- Mittel (34) zum Berechnen, die konfiguriert sind, um die Lage oder eine Lageänderung des Satelliten (10), welche durch die Drehung des Drehelements (220) des mindestens einen Trägheitsstellglieds (22) induziert wird, in Abhängigkeit von Messungen des Drehwinkels des Drehelements (220) durch den Winkeldetektor (32) zu bestimmen.

**2.** Vorrichtung (30) nach Anspruch 1, **dadurch gekennzeichnet, dass** sie einen Lagedetektor (36) aufweist, der imstande ist, die Lage des Satelliten (10) zu messen und dadurch, dass die Mittel (34) zum Berechnen konfiguriert sind, um die Lage des Satelliten (10) in Abhängigkeit von Messungen des Drehwinkels des Drehelements (220) durch den Winkeldetektor (32) und in Abhängigkeit von Messungen der Lage des Satelliten (10) durch den Lagedetektor (36) zu bestimmen.

**3.** Vorrichtung (30) nach Anspruch 2, **dadurch gekennzeichnet, dass** der Lagedetektor (36) ein Sternsensor ist.

4. Vorrichtung (30) nach einem der vorstehenden Ansprüche, **dadurch gekennzeichnet, dass** die Mittel (34) zum Berechnen mindestens einen digitalen Schätzfilter (340, 342, 346) umfassen.

5. Vorrichtung (30) nach Anspruch 4, **dadurch gekennzeichnet, dass** der mindestens eine digitale Schätzfilter (340, 342, 346) ein Kalman-Filter ist.

6. Vorrichtung (30) nach einem der vorstehenden Ansprüche, **dadurch gekennzeichnet, dass** der Winkeldetektor (32) imstande ist, den Drehwinkel des Drehelements (220) mit einer Auflösung kleiner oder gleich 1/128. Umdrehung, vorzugsweise kleiner oder gleich 1/512. Umdrehung zu messen.

7. Vorrichtung (30) nach einem der vorstehenden Ansprüche, **dadurch gekennzeichnet, dass** der Winkeldetektor (32) ein Hall-Sensor oder ein optischer Geber ist.

8. Satellit (10), ein System (20) zur Lageregelung aufweisend, **dadurch gekennzeichnet, dass** er eine Vorrichtung (30) nach einem der vorstehenden Ansprüche aufweist, und wobei das mindestens eine Trägheitsstellglied (22) ein Reaktionsrad ist.

9. Satellit (10) nach Anspruch 8, **dadurch gekennzeichnet, dass** er mit keinem Gyroskop versehen ist.

10. Verfahren (50) zum Bestimmen einer Lage oder einer Lageänderung eines Satelliten (10), wobei der Satellit mit einem System (20) zur Lageregelung versehen ist, welches mindestens ein Trägheitsstellglied (22) aufweist, wobei das mindestens eine Trägheitsstellglied ein Drehelement (220) aufweist, das um eine Drehachse drehbar montiert ist, ein Drehelement, dessen Drehung angesteuert wird, um ein Lageregelungsmoment des Satelliten zu erstellen, **dadurch gekennzeichnet, dass** das mindestens eine Trägheitsstellglied (22) zuvor mit einem Winkeldetektor (32) versehen wird, der imstande ist, den Drehwinkel des Drehelements (220) um dessen Drehachse zu messen, wobei das Verfahren die folgenden Schritte aufweist:

   - (52) Messen des Drehwinkels des Drehelements (220) um dessen Drehachse anhand des Winkeldetektors (32),
   - (56) Bestimmen der Lage oder der Lageänderung des Satelliten, welche durch die Drehung des Drehelements (220) des mindestens einen Trägheitsstellglieds (22) induziert wird, in Abhängigkeit von Messungen des Drehwinkels des Drehelements (220) durch den Winkeldetektor (32).

11. Verfahren (50) nach Anspruch 10, **dadurch gekennzeichnet, dass**:

   - das Verfahren, da der Satellit (10) vorab mit einem Lagedetektor (36) versehen wird, der imstande ist, die Lage des Satelliten zu messen, einen Schritt (54) des Messens der Lage des Satelliten aufweist,
   - die Lage des Satelliten in Abhängigkeit von Messungen des Drehwinkels des Drehelements (220) durch den Winkeldetektor (32) und in Abhängigkeit von den Messungen der Lage des Satelliten (10) durch den Lagedetektor (36) bestimmt wird.

12. Verfahren (50) nach Anspruch 11, **dadurch gekennzeichnet, dass** die Lage des Satelliten (10) auch in Abhängigkeit von Momentvorgaben bestimmt wird, die auf das mindestens eine Trägheitsstellglied angewendet werden.

13. Verfahren (50) nach einem der Ansprüche 11 bis 12, **dadurch gekennzeichnet, dass** der Schritt (56) des Bestimmens der Lage des Satelliten (10), einen digitalen Schätzfilter anwendet, wobei die Messungen des Drehwinkels des Drehelements (220) und die Messungen der Lage des Satelliten (10) am Eingang des digitalen Schätzfilters bereitgestellt werden.

14. Verfahren (50) nach Anspruch 13, **dadurch gekennzeichnet, dass** der digitale Schätzfilter ein Kalman-Filter ist.

15. Verfahren (50) nach Anspruch 11, **dadurch gekennzeichnet, dass** der Schritt (56) des Bestimmens der Lage des Satelliten (10) die folgenden Unterschritte umfasst:

   - (560) Schätzen des Moments, das durch das mindestens eine Trägheitsstellglied (22) erstellt wird, in Abhängigkeit von Messungen des Drehwinkels des Drehelements (220),
   - (562) Schätzen der Lage des Satelliten (10) in Abhängigkeit von der Schätzung des durch das mindestens eine Trägheitsstellglied (22) erstellten Moments und in Abhängigkeit von Messungen der Lage des Satelliten (10) durch den Lagedetektor (36).

**16.** Verfahren (50) nach Anspruch 15, **dadurch gekennzeichnet, dass** der Unterschritt (562) des Schätzens der Lage des Satelliten (10) einen ersten Kalman-Filter einsetzt, und dadurch, dass die Messungen der Lage des Satelliten und die Schätzung des durch das mindestens eine Trägheitsstellglied (22) erstellten Moments am Eingang des ersten Kalman-Filters bereitgestellt werden.

**17.** Verfahren (50) nach einem der Ansprüche 15 bis 16, **dadurch gekennzeichnet, dass** der Unterschritt (560) des Schätzens des durch das mindestens eine Trägheitsstellglied (22) erstellten Moments einen zweiten Kalman-Filter einsetzt, und dadurch, dass die Messungen des Drehwinkels des Drehelements (220) am Eingang des zweiten Kalman-Filters bereitgestellt werden.

**18.** Computerprogrammprodukt, **dadurch gekennzeichnet, dass** es eine Reihe von Programmcodebefehlen aufweist, die, wenn sie von einem Computer ausgeführt werden, ein Verfahren nach einem der Ansprüche 10 bis 17 umsetzen.

**Claims**

**1.** A device (30) for determining an attitude or an attitude variations of a satellite (10), said satellite being provided with an attitude control system (20) comprising at least one inertial actuator (22), said at least one inertial actuator comprising a rotary element (220) mounted to move in rotation about an axis of rotation, a rotary element whose rotation is controlled to create an attitude control torque for said satellite, **characterized in that** said device (30) comprises:

- an angular sensor (32) suitable for measuring the angle of rotation of the rotary element about its axis of rotation,
- computation means (34) configured to determine the attitude or the attitude variation of the satellite (10), induced by the rotation of the rotary element (220) of the at least one inertial actuator (22), as a function of measurements of the angle of rotation of the rotary element (220) by the angular sensor (32).

**2.** The device (30) as claimed in claim 1, **characterized in that** it comprises an attitude sensor (36) suitable for measuring the attitude of the satellite (10), and **in that** the computation means (34) are configured to determine the attitude of the satellite (10) as a function of measurements of the angle of rotation of the rotary element (220) by the angular sensor (32) and as a function of measurements of the attitude of the satellite (10) by the attitude sensor (36).

**3.** The device (30) as claimed in claim 2, **characterized in that** the attitude sensor (36) is a stellar sensor.

**4.** The device (30) as claimed in one of the preceding claims, **characterized in that** the computation means (34) comprise at least one digital estimation filter (340, 342, 346).

**5.** The device (30) as claimed in claim 4, **characterized in that** the at least one digital estimation filter (340, 342, 346) is a Kalman filter.

**6.** The device (30) as claimed in one of the preceding claims, **characterized in that** the angular sensor (32) is suitable for measuring the angle of rotation of the rotary element (220) with a resolution equal to or less than 1/128th of a revolution, preferably equal to or less than 1/512th of a revolution.

**7.** The device (30) as claimed in one of the preceding claims, **characterized in that** the angular sensor (32) is a Hall-effect sensor or an optical coder.

**8.** A satellite (10) comprising an attitude control system (20), **characterized in that** it comprises a device (30) as claimed in one of the preceding claims, and in which the at least one inertial actuator (22) is a reaction wheel.

**9.** The satellite (10) as claimed in claim 8, **characterized in that** it has no gyrometer.

**10.** A method (50) for determining an attitude or an attitude variation of a satellite (10), said satellite being provided with an attitude control system (20) comprising at least one inertial actuator (22), said at least one inertial actuator comprising a rotary element (220) mounted to move in rotation about an axis of rotation, a rotary element whose rotation is controlled to create an attitude control torque for said satellite, **characterized in that**, the at least one inertial actuator (22) being previously provided with an angular sensor (32) suitable for measuring the angle of rotation of the rotary element (220) about its axis of rotation, the method comprises the steps of:

- (52) measuring the angle of rotation of the rotary element (220) about its axis of rotation by means of said angular sensor (32),
- (56) determining the attitude or the attitude variation of the satellite, induced by the rotation of the rotary element (220) of the at least one inertial actuator (22), as a function of measurements of the angle of rotation of the rotary element (220) by the angular sensor (32).

11. The method (50) as claimed in claim 10, **characterized in that**:

- the satellite (10) being previously provided with an attitude sensor (36) suitable for measuring the attitude of the satellite, the method comprises a step (54) of measuring the attitude of the satellite,
- the attitude of the satellite is determined as a function of measurements of the angle of rotation of the rotary element (220) by the angular sensor (32) and as a function of measurements of the attitude of the satellite (10) by the attitude sensor (36).

12. The method (50) as claimed in claim 11, **characterized in that** the attitude of the satellite (10) is determined also as a function of torque setpoints applied to the at least one inertial actuator.

13. The method (50) as claimed in one of claims 11 or 12, **characterized in that** the step (56) of determining the attitude of the satellite (10) implements a digital estimation filter, the measurements of the angle of rotation of the rotary element (220) and the measurements of the attitude of the satellite (10) being supplied as input to said digital estimation filter.

14. The method (50) as claimed in claim 13, **characterized in that** the digital estimation filter is a Kalman filter.

15. The method (50) as claimed in claim 11, **characterized in that** the step (56) of determining the attitude of the satellite (10) comprises the substeps of:

- (560) estimating the torque created by the at least one inertial actuator (22) as a function of measurements of the angle of rotation of the rotary element (220),
- (562) estimating the attitude of the satellite (10) as a function of the estimate of the torque created by the at least one inertial actuator (22) and as a function of measurements of the attitude of the satellite (10) by the attitude sensor (36).

16. The method (50) as claimed in claim 15, **characterized in that** the substep (562) of estimating the attitude of the satellite (10) implements a first Kalman filter, and **in that** the measurements of the attitude of the satellite and the estimate of the torque created by the at least one inertial actuator (22) are supplied as input to said first Kalman filter.

17. The method (50) as claimed in one of claims 15 or 16, **characterized in that** the substep (560) of estimating the torque created by the at least one inertial actuator (22) implements a second Kalman filter, and **in that** the measurements of the angle of rotation of the rotary element (220) are supplied as input to said second Kalman filter.

18. A computer program product, **characterized in that** it comprises a set of program code instructions which, when they are executed by a processor, implement a method as claimed in one of claims 10 to 17.

**Fig. 1**

Mesures de l'angle de rotation du rotor

Capteur angulaire

Senseur stellaire

Mesures de l'attitude du satellite

Filtre de Kalman

Attitude du satellite

Couple commandé

**Fig. 2a**

Mesures de l'angle de rotation du rotor

Capteur angulaire

Premier filtre de Kalman

Estimation du couple créé

Senseur stellaire

Mesures de l'attitude du satellite

Second filtre de Kalman

Attitude du satellite

**Fig. 2b**

52 —⌇     54 —⌇                                    ⌇— 52          ⌇— 54

| Mesures des angles de rotation des **rotors des roues de réaction** | Mesure de l'attitude du satellite |
|---|---|

52 · Mesures des angles de rotation des **rotors des roues de réaction**   54 · Mesure de l'attitude du satellite

Détermination de la variation d'attitude du satellite

## Fig. 3a

50   56

Estimation du couple créé par les roues de réaction

560

562

Estimation de la variation d'attitude du satellite

56

## Fig. 3b     50

Ecart-type $\sigma_\Theta$

Fig. 4

**EP 2 694 375 B1**

## RÉFÉRENCES CITÉES DANS LA DESCRIPTION

**Documents brevets cités dans la description**

- US 6263264 B